# EUROPEAN PATENT APPLICATION

(11) **EP 4 749 418 A1**
(43) Date of publication of application: **27.05.2026**
(21) Application number: 24855865.2
(22) Date of filing: 22.08.2024
(51) Int. Cl.: G06F 3/04815

(54) **INTERFACE INTERACTION METHOD FOR 3D SPACE AND AR DEVICE**

(30) Priority: 24.08.2023 CN 202311075152
(71) Applicant: Hangzhou Lingban Technology Co., Ltd., Hangzhou, Zhejiang 310000 (CN)
(72) Inventor: ZHENG, Zhenyu, Hangzhou, Zhejiang 310000 (CN); WANG, Danting, Hangzhou, Zhejiang 310000 (CN); ZHANG, Mo, Hangzhou, Zhejiang 310000 (CN); WANG, Junjie, Hangzhou, Zhejiang 310000 (CN)
(74) Representative: Huang, Liwei
(86) International application number: PCT/CN2024/113858
(87) International publication number: WO 2025/040143

(57) **Abstract**

This application discloses an interface interaction method for 3D space and an AR device. A specific implementation of the method includes: in response to detecting a selection operation performed on an application icon in a first interface, hiding the first interface, and displaying, in a second interface, an application page corresponding to the selected application icon; and in response to detecting a zoom-in operation performed on the application page in the second interface, displaying the application page in a third interface, and hiding the second interface. This implementation improves user experience during an interactive operation.

## Description

### CROSS-REFERENCES TO RELATED APPLICATIONS

This application claims priority to Chinese Patent Application No. 202311075152.3, filed with the China National Intellectual Property Administration on August 24, 2023, which is incorporated herein by reference in its entirety.

### TECHNICAL FIELD

This application relates to the field of computer technologies, and in particular, to an interface interaction method for 3D space and an AR device.

### BACKGROUND

A space operating system is an operating system customized and developed based on an AR (Augmented Reality) device. A conventional operating system is limited to a display range of a screen, and the space operating system benefits from a spatial positioning capability of the AR device, so that an interactive interface blending virtuality and reality that is not limited by a physical screen may be constructed in space in which a user is located. Content in the conventional operating system is displayed in a plane, and a space concept such as a display distance is generally absent in a conventional interaction manner.

However, the applicant finds that when page interaction is performed in the foregoing manner, the following technical problems often exist:

The space concept such as the display distance is generally absent in the interaction manner of the conventional operating system, and displayed content is in the plane, and therefore cannot well adapt to the space operating system. Consequently, the user lacks space sense in a process of using the AR device, and this does not conform to an interaction habit of the user in 3D space, leading to poor user experience.

The foregoing information applied for in this background section is only for enhancing understanding of the background of the concept of this application, and therefore, the information may contain information that does not form the prior art that is known to a person of ordinary skill in the art in China.

### SUMMARY

The summary section of this application is intended to introduce concepts in a brief form, and the concepts are described in detail in the subsequent description of embodiments section. The summary section of this application is neither intended to identify key features or necessary features of the claimed technical solutions, nor intended to limit the scope of the claimed technical solutions.

Some embodiments of this application propose an interface interaction method for 3D space and an AR device, to solve one or more of the technical problems mentioned in the background section above.

According to a first aspect, some embodiments of this application provide an interface interaction method for 3D space. The method includes: in response to a selection operation on an application icon in a first interface, hiding the first interface, and displaying, in a second interface, an application page corresponding to the selected application icon, where the first interface includes an application icon list, and a display distance of the second interface is greater than a display distance of the first interface; and in response to a zoom-in operation on the application page in the second interface, displaying the application page in a third interface, and hiding the second interface, where a display distance of the third interface is greater than the display distance of the second interface, and the display distance is a distance from an interface to a camera location of the 3D space.

Optionally, the first interface includes a status bar, and the status bar is located under the application icon list. The method further includes: in response to detecting that a horizontal head movement distance of a user is greater than a first preset distance threshold, controlling the status bar to move in a horizontal direction following a field of view of the user.

Optionally, the method further includes: in response to an anchor operation on the status bar, and in response to detecting that the horizontal head movement distance of the user is greater than a second preset distance threshold, controlling the status bar to move in the horizontal direction following the field of view of the user, where the first preset distance threshold and the second preset distance threshold meet a preset threshold condition.

Optionally, after the in response to detecting a selection operation performed on an application icon in a first interface, hiding the first interface, the method further includes: displaying the status bar.

Optionally, after the in response to detecting a zoom-in operation performed on the application page in the second interface, displaying the application page in a third interface, and hiding the second interface, the method further includes: hiding the status bar.

Optionally, the first interface is a rectangular plane, and the second interface is a curved ring surface centered at a user observation origin.

Optionally, the display distance of the first interface ranges from 1 m to 2 m, the display distance of the second interface meets a first preset distance condition, and the display distance of the third interface meets a second preset distance condition.

Optionally, at least one window is displayed in the second interface, and a single window is displayed in the third interface.

Optionally, the method further includes: in response to determining that a current display interface is the second interface and in response to a selection operation on an icon representing the application icon list in the status bar, displaying the application icon list in the first interface, and displaying the second interface behind the first interface in a specific display manner.

Optionally, the method further includes: in response to detecting an operation of adjusting a display size of the application page in the second interface, adjusting the display size of the application page, and displaying an application page with an adjusted display size in the second interface through update.

According to a second aspect, some embodiments of this application provide an AR device, including: one or more processors; a storage apparatus, configured to store one or more programs; and a display module, configured to perform imaging in front of eyes of a user, where when the one or more programs are executed by the one or more processors, the one or more processors are enabled to implement the method described in any implementation of the first aspect.

According to a third aspect, some embodiments of this application provide a computer-readable medium, where a computer program is stored in the computer-readable medium, and when the computer program is executed by a processor, the method described in any implementation of the first aspect is implemented.

The foregoing embodiments of this application have the following beneficial effects: According to the interface interaction method for the 3D space in some embodiments of this application, user experience during interface interaction is improved. Specifically, a reason for poor user experience is that a space concept such as a display distance is generally absent in an interaction manner of a conventional operating system, and displayed content is in a plane, and therefore cannot well adapt to a space operating system. Consequently, the user lacks space sense in a process of using the AR device, and this does not conform to an interaction habit of the user in 3D space, leading to poor user experience. Based on this, in the interface interaction method for the 3D space in some embodiments of this application, first, in response to detecting the selection operation performed on the application icon in the first interface, the first interface is hidden, and the application page corresponding to the selected application icon is displayed in the second interface, where the first interface includes the application icon list, and the display distance of the second interface is greater than the display distance of the first interface. Therefore, after selecting an application in the first interface, the user may hide the first interface, and display, in the second interface, an application page corresponding to the selected application. Then, in response to detecting the zoom-in operation performed on the application page in the second interface, the application page is displayed in the third interface, and the second interface is hidden, where the display distance of the third interface is greater than the display distance of the second interface, and the display distance is the distance from the interface to the camera location of the 3D space. Therefore, after zooming in the application page in the second interface, the user may hide the second interface, and display the zoomed-in application page in the third interface. Because of the implemented interface interaction method for the 3D space, different display interfaces have different distances from the user, content can be displayed by using different display interfaces in different interactive operations of the user, which makes interface interaction more spatial. Therefore, user experience during the interactive operation is improved.

### BRIEF DESCRIPTION OF DRAWINGS

The above-mentioned and other features, advantages, and aspects of embodiments of this application become more apparent with reference to the accompanying drawings and the following description of embodiments. Throughout the accompanying drawings, the same or similar reference numerals denote the same or similar elements. It should be understood that the accompanying drawings are schematic, and components and elements are not necessarily drawn to scale.
FIG. 1 is a schematic diagram of an architecture of an AR device with a display screen according to an embodiment of this application;
FIG. 2 is a schematic diagram of an application scenario of an interface interaction method for 3D space according to this application;
FIG. 3 is a schematic diagram of an interface structure of an interface interaction method for 3D space according to this application;
FIG. 4 is a flowchart of some embodiments of an interface interaction method for 3D space according to this application;
FIG. 5 is a flowchart of some other embodiments of an interface interaction method for 3D space according to this application; and
FIG. 6 is a schematic diagram of a hardware structure of an AR device applicable to implementing some embodiments of this application.

### DESCRIPTION OF EMBODIMENTS

The following describes embodiments of this application in more detail with reference to the accompanying drawings. Although some embodiments of this application are shown in the accompanying drawings, it should be understood that this application can be implemented in various forms and should not be construed as being limited to the embodiments set forth herein. On the contrary, these embodiments are provided for a more thorough and complete understanding of this application. It should be understood that, the accompanying drawings and embodiments of this application are merely used as examples, but are not used to limit the protection scope of this application.

In addition, it should also be noted that, for ease of description, only parts related to the relevant application are shown in the accompanying drawings. Embodiments of this application and features in the embodiments may be mutually combined in a case that no conflict occurs.

It should be noted that concepts such as "first" and "second" mentioned in this application are only used to distinguish between different apparatuses, modules, or units, and are not used to limit the sequence of functions performed by these apparatuses, modules, or units or interdependence.

It should be noted that the modifications of "a" and "a plurality of" mentioned in this application are schematic rather than limiting, and a person skilled in the art should understand that unless the context clearly indicates otherwise, they should be understood as "one or more".

The names of messages or information exchanged between a plurality of apparatuses in the implementations of this application are used for illustrative purposes only, and are not used to limit the scope of these messages or information.

This application is described in detail below with reference to the accompanying drawings and the embodiments.

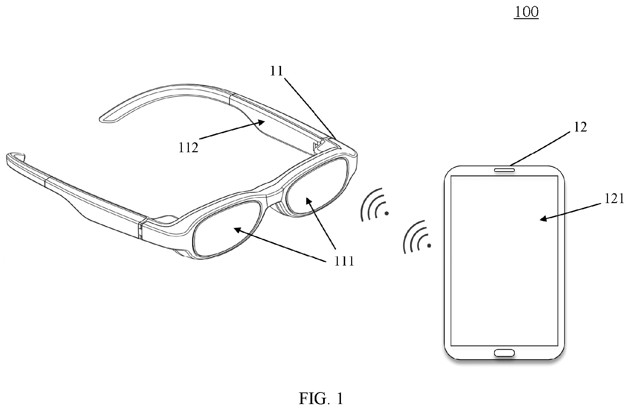

FIG. 1 is a schematic diagram of an architecture 100 of an AR device with a display screen according to an embodiment of this application.

As shown in FIG. 1, the architecture 100 of the AR device may include AR glasses 11 and a computing terminal 12.

The AR glasses 11 may include one or two display screens 111. The display screen is configured to display an application page and an application identifier group. In addition, the AR glasses 11 further includes a frame 112. In some embodiments, a sensor, a processing unit, a memory, and a battery of the AR glasses 11 may be placed inside the frame 112. In some optional implementations of some embodiments, one or more of the sensor, the processing unit, the memory, and the battery may be integrated into another independent accessory (not shown in FIG. 1), and connected to the frame 112 through a data cable. In some optional implementations of some embodiments, the AR glasses 11 may have only a display function and some sensors, and provide capabilities such as data processing, data storage, and power supply via the computing terminal 12. The computing terminal 12 may include a display screen 121. In some embodiments, the AR glasses 11 and the computing terminal 12 may communicate with each other in a wireless connection manner. In some optional implementations of some embodiments, the AR glasses 11 and the computing terminal 12 may alternatively be connected through a data cable (not shown).

It should be noted that the wireless connection manner may include but is not limited to a 3G/4G connection, a WiFi connection, a Bluetooth connection, a WiMAX connection, a Zigbee connection, a UWB (Ultra-Wide Band) connection, and another currently known or future developed wireless connection manner.

It should be understood that a quantity of AR glasses and a quantity of computing terminals in FIG. 1 are merely examples. According to implementation needs, there may be any proper quantity of AR glasses and any proper quantity of computing terminals.

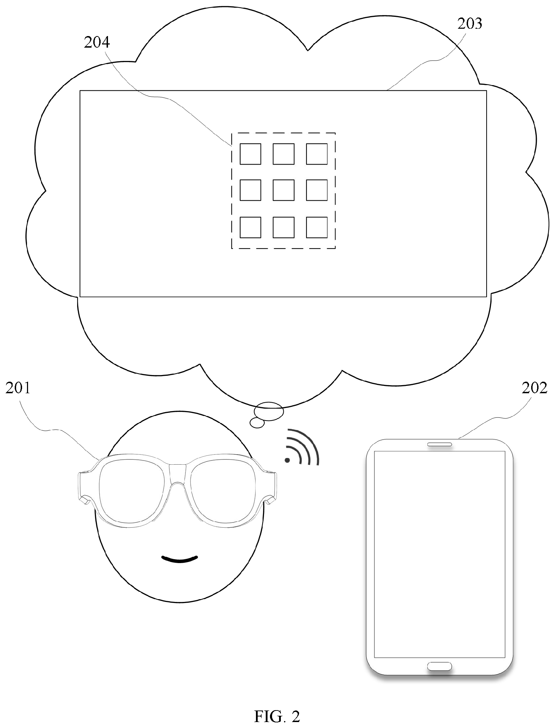

Referring to FIG. 2, the following shows a schematic diagram of an application scenario of an interface interaction method for 3D space according to some embodiments of this application.

As shown in FIG. 2, AR glasses 201 may display an application icon list 204 on a display screen 203 of the AR glasses 201 in response to a first connection to a computing terminal 202 and receiving a display information record corresponding to the computing terminal 202. The display information record is used to represent that the application icon list 204 and/or an application page corresponding to the computing terminal 202 are displayed on the display screen 203.

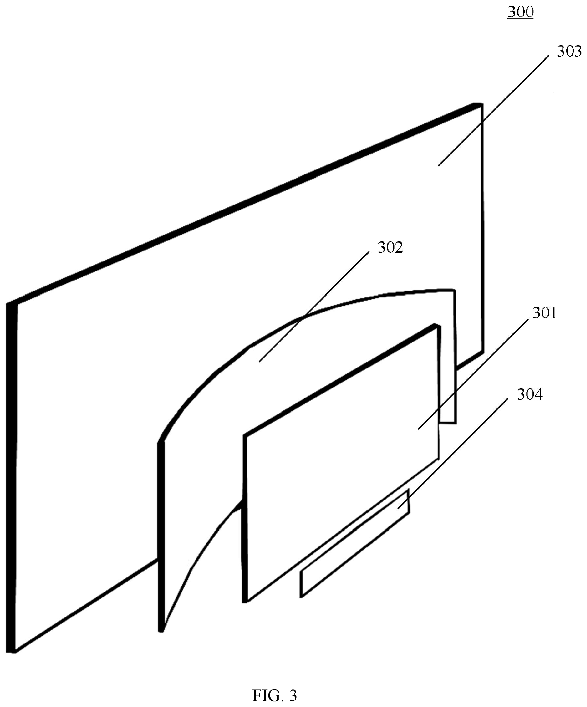

Further referring to FIG. 3, a schematic diagram 300 of an interface structure of an interface interaction method for 3D space according to this application is shown.

In this example, a display screen of AR glasses has a 3D display effect. As shown in FIG. 3, display space is 3D space, and an interface displayed in the 3D space may include a first interface 301, a second interface 302, and a third interface 303. The first interface 301 may include a status bar 304. A display distance of the first interface 301 may range from 1 m to 2 m. A display distance of the second interface 302 may be greater than the display distance of the first interface 301. A display distance of the third interface 303 may be greater than the display distance of the second interface 302.

It may be understood that, the interface interaction method for the 3D space may be performed by an AR device, or may be an associated terminal device. When the interface interaction method for the 3D space is performed by software, the software may be installed in the foregoing AR device. The software may be implemented as, for example, a plurality of pieces of software or a plurality of software modules that are used to provide a distributed service, or may be implemented as single software or a single software module. This is not specifically limited herein.

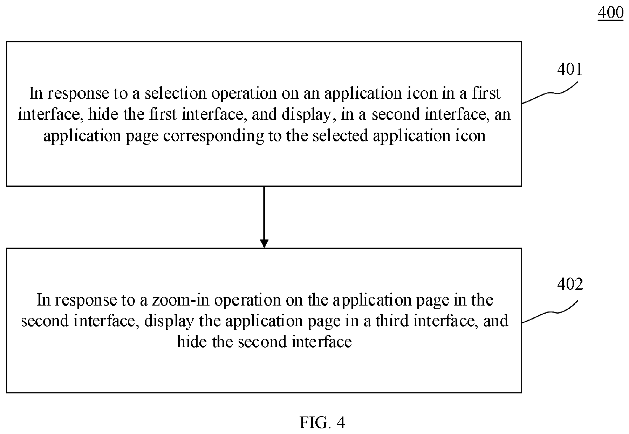

Further referring to FIG. 4, a procedure 400 of some embodiments of an interface interaction method for 3D space according to this application is shown. The interface interaction method for the 3D space includes the following steps:

Step 401: In response to a selection operation on an application icon in a first interface, hide the first interface, and display, in a second interface, an application page corresponding to the selected application icon.

In some embodiments, in response to the selection operation on the application icon in the first interface, an execution entity (for example, an AR device) of the interface interaction method for the 3D space may hide the first interface, and display, in the second interface, the application page corresponding to the selected application icon. The first interface may be a rectangular plane, and the second interface may be a curved ring surface centered at a user observation origin. A display distance is a horizontal distance from an interface to a camera location of the 3D space, and the camera location of the 3D space may represent location coordinates of the user observation origin.

In some embodiments, a display distance of the second interface may be greater than a display distance of the first interface. A display distance of the first interface may range from 1 m to 2 m. The display distance of the second interface may meet a first preset distance condition. The first preset distance condition may be that the display distance of the second interface is greater than the display distance of the first interface, and is less than a sum of the display distance of the first interface and a preset distance. For example, if the display distance of the first interface is 1 m, and the preset distance may be 0.5 m, the display distance of the second interface is greater than 1 m and less than 1.5 m.

In some embodiments, at least one window may be displayed in the second interface (that is, a plurality of application pages may be displayed). The first interface may display an application icon list, and each application icon in the application icon list may represent each application. The first interface may further include a status bar, and the status bar may be located under the application icon list. Content displayed in the status bar may include but is not limited to an icon representing the application icon list, a user personal information entry control, a date, and weather. The user personal information entry control may represent a control for entering a user personal information page. The application page may be an initial page of an application corresponding to the selected application icon. The selection operation on the application icon may be but is not limited to: tapping, hovering, gesture control, voice control, head gesture control, or the like.

Optionally, after in response to the selection operation on the application icon in the first interface, the first interface is hidden, the status bar may be further retained. In this way, when the second interface is displayed, the status bar may be further displayed, and a display distance of the status bar is the same as the display distance of the first interface, and is less than the display distance of the second interface.

Step 402: In response to a zoom-in operation on the application page in the second interface, display the application page in a third interface, and hide the second interface.

In some embodiments, when the zoom-in operation on the application page in the second interface is detected, in response to the zoom-in operation, the application page may be displayed in the third interface, and the second interface may be hidden. The third interface may be a rectangular plane, and a display distance of the third interface may be greater than the display distance of the second interface. The display distance of the third interface may further meet a second preset distance condition. The second preset distance condition may be that the display distance of the third interface is greater than a first preset multiple of the display distance of the first interface, and is less than a second preset multiple of the display distance of the first interface. For example, if the display distance of the first interface is 1 m, the first preset multiple may be 4, and the second preset multiple may be 5, the display distance of the third interface is greater than 4 m and less than 5 m. The third interface may display only a single window (that is, display only one application page). The zoom-in operation on the application page may be but is not limited to gesture control, voice control, or the like. Therefore, because a display size of the third interface for the application page is greater than a display size of the second interface for a single application page, use space of the entire application page can be improved, so that the user is more immersed in watching content of the application page.

Optionally, after in response to the zoom-in operation on the application page in the second interface, the application page is displayed in the third interface, and the second interface is hidden, the status bar may be hidden. Therefore, only the zoomed-in application page is displayed in the third interface, so that the user can watch zoomed-in content more emphatically, to improve user experience.

Optionally, in response to determining that a current display interface is the second interface and in response to a selection operation on an icon representing the application icon list in the status bar, the application icon list may be further displayed in the first interface, and the second interface is displayed behind the first interface in a specific display manner, to achieve a display effect of highlighting the first interface and weakening the second interface. The selection operation on the icon representing the application icon list may be but is not limited to: tapping, hovering, gesture control, voice control, or the like. In practice, a display parameter of the second interface may be updated in a preset time period, so that the second interface gradually displays behind the first interface. Herein, setting of the preset time period is not limited. The display parameter may include but is not limited to display transparency, a display size, a display distance, and the like.

Optionally, in response to an operation of adjusting a display size of the application page in the second interface, the display size of the application page may be further adjusted, and an application page with an adjusted display size is displayed in the second interface through update. The operation of adjusting the display size may be but is not limited to: tapping, hovering, gesture control, or the like. In some implementations, the display size of the application page adapts to the display size of the second interface. Therefore, resolution of the second interface may be adjusted to change the display size of the second interface, so as to adjust the display size of the application page. Therefore, displayed content may be extended, and the user is more immersed when watching content with a long picture and large amount of information (for example, Along the River During the Qingming Festival or a cloud computer interface), and can watch more detailed content, to improve user experience.

The foregoing embodiments of this application have the following beneficial effects: According to the interface interaction method for the 3D space in some embodiments of this application, user experience during interface interaction is improved. Specifically, a reason for poor user experience is that a space concept such as a display distance is generally absent in an interaction manner of a conventional operating system, and displayed content is in a plane, and therefore cannot well adapt to a space operating system. Consequently, the user lacks space sense in a process of using the AR device, and this does not conform to an interaction habit of the user in 3D space, leading to poor user experience. Based on this, in the interface interaction method for the 3D space in some embodiments of this application, first, in response to the selection operation on the application icon in the first interface, the first interface is hidden, and the application page corresponding to the selected application icon is displayed in the second interface, where the first interface includes the application icon list, and the display distance of the second interface is greater than the display distance of the first interface. Therefore, after selecting an application in the first interface, the user may hide the first interface, and display, in the second interface, an application page corresponding to the selected application. Then, in response to the zoom-in operation on the application page in the second interface, the application page is displayed in the third interface, and the second interface is hidden, where the display distance of the third interface is greater than the display distance of the second interface, and the display distance is the distance from the interface to the camera location of the 3D space. Therefore, after zooming in the application page in the second interface, the user may hide the second interface, and display the zoomed-in application page in the third interface. Because of the implemented interface interaction method for the 3D space, different display interfaces have different display distances from the user, content can be displayed by using different display interfaces in different interactive operations of the user, which makes interface interaction more spatial. Therefore, user experience during the interactive operation is improved.

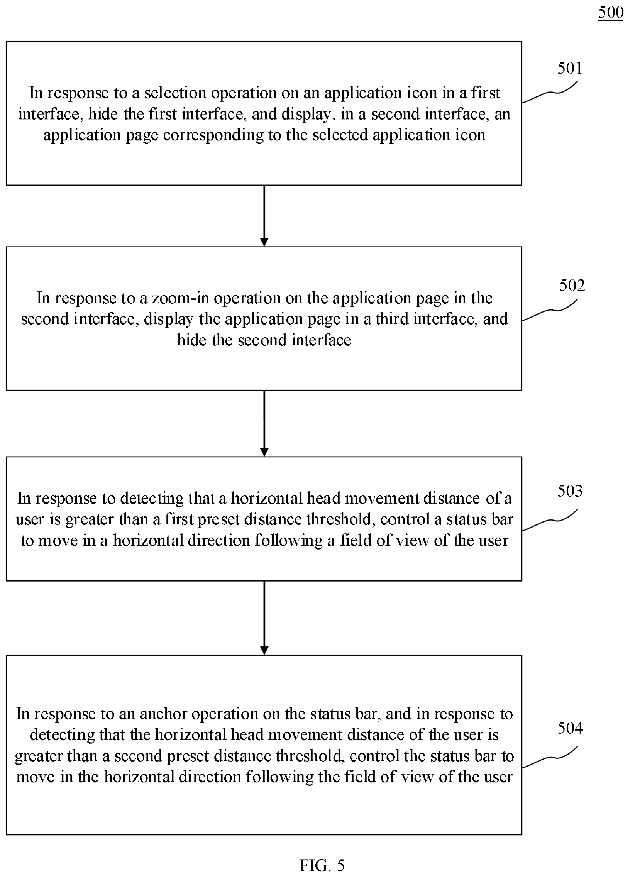

Further referring to FIG. 5, a procedure 500 of some other embodiments of an interface interaction method for 3D space is shown. The procedure 500 of the interface interaction method for the 3D space includes the following steps:

Step 501: In response to a selection operation on an application icon in a first interface, hide the first interface, and display, in a second interface, an application page corresponding to the selected application icon.

Step 502: In response to a zoom-in operation on the application page in the second interface, display the application page in a third interface, and hide the second interface.

In some embodiments, for a specific implementation of steps 501 and 502 and technical effects brought, refer to steps 401 and 402. Details are not described herein again.

Step 503: In response to detecting that a horizontal head movement distance of a user is greater than a first preset distance threshold, control a status bar to move in a horizontal direction following a field of view of the user.

When the head of the user rotates in the horizontal direction (that is, the head moves horizontally), the field of view also moves accordingly. Therefore, movement of the status bar may be controlled based on horizontal head movement of the user, so that the status bar is always in a range of the field of view. The first preset distance threshold may be a maximum value of a distance at which the head of the user moves in a small range in a non-moving state, for example, may be 30 degrees. In the non-moving state (for example, sitting and standing still), there is an involuntary shake in the head of a person, and this shake does not cause an excessive change of the field of view, that is, the status bar does not move out of the range of the field of view due to this shake of the head. Therefore, when the horizontal head movement distance of the user is less than or equal to the first preset distance threshold, for example, when the horizontal head movement of the user is less than or equal to 30 degrees, the status bar is controlled to be fixed without moving following the field of view of the user, so that the user can more easily select an icon on the status bar. In the non-moving state, when the horizontal head movement distance of the user is greater than the first preset distance threshold (for example, the horizontal head movement of the user is greater than 30 degrees, for example, the user turns to the right side, and the horizontal head movement is 90 degrees), the status bar is controlled to move in the horizontal direction following the field of view of the user, so that the status bar is always in the range of the field of view.

It should be noted that, in this step, in the non-moving state, when the horizontal head movement distance of the user is less than or equal to the first preset distance threshold, interfaces (the first interface, the second interface, and the third interface) may also be simultaneously controlled to be fixed without moving following the field of view of the user. When the horizontal head movement distance of the user is greater than the first preset distance threshold, interfaces may also be simultaneously controlled to move in the horizontal direction following the field of view of the user.

Step 504: In response to an anchor operation on the status bar, and in response to detecting that the horizontal head movement distance of the user is greater than a second preset distance threshold, control the status bar to move in the horizontal direction following the field of view of the user.

Unlike the non-moving state, in a moving state, jitter occurs in content displayed in 3D space. For example, during a flight, if the user watches a video through AR glasses, because intense turbulence of an aircraft causes the body of the user to shake violently, and the range of the field of view frequently and significantly changes (that is, jitter) within short time, a video page shakes along with the field of view, affecting watching effects. Therefore, this example provides an anti-jitter function: The user selects target displayed content, performs anchor, and detects the horizontal head movement distance of the user in response to an anchor operation on the target displayed content. If the horizontal head movement distance is less than or equal to the second preset distance threshold, the target displayed content is controlled to be fixed without moving following the field of view of the user. If the horizontal head movement distance is greater than the second preset distance threshold, the target displayed content is controlled to move following the field of view of the user. The target content herein may be a status bar or an interface.

The anchor operation may be but is not limited to: hovering, gesture control, voice control, or the like. The second preset distance threshold may be a maximum value of a distance at which the head of the user moves in a large range in the moving state. The first preset distance threshold and the second preset distance threshold may meet a preset threshold condition. The preset threshold condition may be that the second preset distance threshold is a preset multiple of a first preset distance. The preset multiple herein may be an integer multiple, or may be a decimal multiple, and preferably, may be a decimal multiple greater than 1. For example, if the first preset distance threshold is 30 degrees, and the preset threshold condition is that the second preset distance threshold is 1.4 times the first preset distance, the second preset distance threshold is 42 degrees. Herein, setting of the preset multiple is not limited.

For example, the target displayed content is the status bar. When the horizontal head movement distance of the user is less than or equal to the second preset distance threshold, the status bar is controlled to be fixed without moving following the field of view of the user, so that the user can more easily select content on the status bar.

For example, the target displayed content is the third interface. When the horizontal head movement distance of the user is less than or equal to the second preset distance threshold, the third interface is controlled to be fixed without moving following the field of view of the user, to ensure stable watching effects. The first interface, the second interface, and the third interface are similar. Details are not described herein again.

It should be noted that if the anchor operation is not detected, the method in step 503 is performed.

It can be learned from FIG. 5 that, compared with descriptions in some embodiments corresponding to FIG. 4, the procedure 500 of the interface interaction method for the 3D space in some embodiments corresponding to FIG. 5 presents a method in which the status bar follows the field of view of the user in a small-range moving state and a large-range moving state of the head of the user. When a small-range movement distance of the head of the user in the horizontal direction is less than or equal to the first preset distance threshold, the status bar is in a fixed state, to prevent a case in which an involuntary head shake of the user causes the status bar to shake, making it difficult for the user to select content on the status bar. When the user selects the status bar and a large-range movement distance of the head in the horizontal direction is less than or equal to the second preset distance threshold, the status bar is in a fixed state, so that the user can more easily select content on the status bar, to improve user experience during an interactive operation.

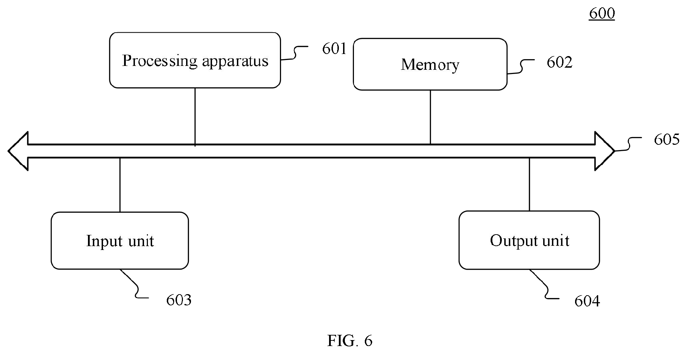

Referring to FIG. 6, the following is a schematic diagram of a hardware structure of an AR device 600 with a display function.

As shown in FIG. 6, the AR device 600 includes a processing apparatus (CPU) 601, a memory (ROM) 602, an input unit 603, and an output unit 604. The processing apparatus 601, the memory 602, the input unit 603, and the output unit 604 are connected to each other through a bus 605. Herein, the method according to some embodiments of this application may be implemented as a computer program and stored in the memory 602. The processing apparatus 601 in the AR device 600 specifically implements, by invoking the computer program stored in the memory 602, an interface interaction function for 3D space defined in the methods in some embodiments of this application. In some implementations, the input unit 603 may include a device such as a camera, a microphone, a gyroscope, an accelerometer, and a magnetometer, and the output unit 604 may be a device that may be configured to display content, such as a display module. The display module may include an optical engine and an optical element. The optical element may include an optical element such as a prism, a free-form surface, a BirdBath, and an optical waveguide. Therefore, when invoking the computer program to perform the interface interaction function for the 3D space, the processing apparatus 601 may control the input unit 603 to obtain an operation instruction such as a gesture or a voice of a user, and control the output unit 604 to display displayed content.

It should be noted that the computer-readable medium described in some embodiments of this application may be a computer-readable signal medium, a computer-readable storage medium, or any combination of the two. For example, the computer-readable storage medium may be but is not limited to an electrical system, apparatus, or device, a magnetic system, apparatus, or device, an optical system, apparatus, or device, an electromagnetic system, apparatus, or device, an infrared system, apparatus, or device, or a semiconductor system, apparatus, or device, or any combination thereof. More specific examples of the computer-readable storage medium may include but are not limited to: an electrical connection having one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In some embodiments of this application, the computer-readable storage medium may be any tangible medium that includes or stores a program, and the program may be used by or in combination with an instruction execution system, apparatus, or component. In some embodiments of this application, the computer-readable signal medium may include a data signal propagated in a baseband or as a part of a carrier, and carries computer-readable program code. The data signal propagated in such a way can be in a plurality of forms, and includes but is not limited to an electromagnetic signal, an optical signal, or any proper combination thereof. The computer-readable signal medium may be alternatively any computer-readable medium other than the computer-readable storage medium, and the computer-readable signal medium may send, propagate, or transmit a program that is used by or in combination with an instruction execution system, apparatus, or component. The program code included in the computer-readable medium may be transmitted by using any proper medium, including but not limited to: a wire, an optical cable, an RF (radio frequency), or any suitable combination thereof.

In some implementations, a client and a server may communicate with each other by using any currently known or future developed network protocol, such as the HTTP (HyperText Transfer Protocol), and may be interconnected with any form or medium of digital data communication (for example, a communication network). Examples of the communication network include a local area network ("LAN"), a wide area network ("WAN"), an internet work (for example, the Internet), an end-to-end network (for example, an ad hoc end-to-end network), and any currently known or future developed network.

The foregoing computer-readable medium may be included in the AR device, or may exist separately and is not assembled into the AR device. The computer-readable medium carries one or more programs. When the one or more programs are executed by the AR device, the AR device is enabled to: in response to detecting a selection operation performed on an application icon in a first interface, hide the first interface, and display, in a second interface, an application page corresponding to the selected application icon, where the first interface includes an application icon list, and a display distance of the second interface is greater than a display distance of the first interface; and in response to detecting a zoom-in operation performed on the application page in the second interface, display the application page in a third interface, and hide the second interface, where a display distance of the third interface is greater than the display distance of the second interface, and the display distance is a distance from an interface to a camera location of the 3D space.

Computer program code for performing operations in some embodiments of this application may be written in one or more programming languages or a combination thereof, such as Java, Smalltalk, and C++, which further include conventional procedural programming languages such as the "C" language or similar programming languages. The program code may be completely executed on a user computer, partially executed on a user computer, executed as an independent software package, partially executed on a user computer and partially executed on a remote computer, or completely executed on a remote computer or a server. In a case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and the block diagrams in the accompanying drawings illustrate possible system architectures, functions, and operations of the system, the method, and the computer program product according to various embodiments of this application. In this regard, each block in the flowchart or the block diagram may represent a module, a program segment, or a part of code. The module, the program segment, or the part of the code includes one or more executable instructions used for implementing designated logic functions. It should also be noted that, in some implementations used as substitutes, functions annotated in blocks may alternatively occur in a sequence different from that annotated in the accompanying drawings. For example, two successively represented blocks may actually be performed basically in parallel, and sometimes the two blocks may be performed in a reverse sequence. This is determined by a related function. It should also be noted that each block in the block diagrams and/or the flowcharts, and a combination of the blocks in the block diagrams and/or the flowcharts may be implemented by a dedicated hardware-based system that executes specified functions or operations, or may be implemented by a combination of dedicated hardware and computer instructions.

The foregoing described functions in this specification may be performed at least in part by one or more hardware logic components. For example, without limitation, example types of hardware logic components that may be used include: a field programmable gate array (FPGA), an application-specific integrated circuit (ASIC), an application specific standard part (ASSP), a system on chip (SOC), a complex programmable logic device (CPLD), and the like.

The above-mentioned descriptions are merely of some preferred embodiments of this application and an illustration of the applied technical principles. A person skilled in the art should understand that the scope involved in the embodiments of this application is not limited to the technical solutions formed by specific combinations of the above-mentioned technical features, and shall also cover other technical solutions formed by any combination of the above-mentioned technical features or equivalent features thereof without departing from the above-mentioned concept of this application, for example, a technical solution formed by mutual replacement between the above-mentioned features and technical features with similar functions applied for (but not limited thereto) in the embodiments of this application.

## Claims

1. An interface interaction method for 3D space, comprising:
in response to a selection operation on an application icon in a first interface, hiding the first interface, and displaying, in a second interface, an application page corresponding to the selected application icon, wherein the first interface comprises an application icon list, and a display distance of the second interface is greater than a display distance of the first interface; and
in response to a zoom-in operation on the application page in the second interface, displaying the application page in a third interface, and hiding the second interface, wherein a display distance of the third interface is greater than the display distance of the second interface, and a display distance is a distance from an interface to a camera location of the 3D space.

2. The method according to claim 1, wherein the first interface comprises a status bar, and the status bar is located under the application icon list; and
the method further comprises:
in response to detecting that a horizontal head movement distance of a user is greater than a first preset distance threshold, controlling the status bar to move in a horizontal direction following a field of view of the user.

3. The method according to claim 2, wherein the method further comprises:
in response to an anchor operation on the status bar, and in response to detecting that the horizontal head movement distance of the user is greater than a second preset distance threshold, controlling the status bar to move in the horizontal direction following the field of view of the user, wherein the first preset distance threshold and the second preset distance threshold meet a preset threshold condition.

4. The method according to claim 2, wherein after the hiding the first interface in response to a selection operation on an application icon in a first interface, the method further comprises:
displaying the status bar.

5. The method according to claim 2, wherein after the displaying the application page in a third interface and hiding the second interface in response to a zoom-in operation on the application page in the second interface, the method further comprises:
hiding the status bar.

6. The method according to claim 1, wherein the first interface is a rectangular plane, and the second interface is a curved ring surface centered at a user observation origin.

7. The method according to claim 1, wherein the display distance of the first interface ranges from 1 m to 2 m, the display distance of the second interface meets a first preset distance condition, and the display distance of the third interface meets a second preset distance condition.

8. The method according to claim 1, wherein at least one window is displayed in the second interface, and a single window is displayed in the third interface.

9. The method according to claim 2, wherein the method further comprises:
in response to determining that a current display interface is the second interface and in response to a selection operation on an icon representing the application icon list in the status bar, displaying the application icon list in the first interface, and displaying the second interface behind the first interface in a specific display manner.

10. The method according to claim 1, wherein the method further comprises:
in response to detecting an operation of adjusting a display size of the application page in the second interface, adjusting the display size of the application page, and displaying an application page with an adjusted display size in the second interface through update.

11. An AR device, comprising:
one or more processors;
a storage apparatus, configured to store one or more programs; and
a display module, configured to perform imaging in front of eyes of a user, wherein
when the one or more programs are executed by the one or more processors, the one or more processors are enabled to implement the method according to any one of claims 1 to 10.
